**Europäisches Patentamt**

**European Patent Office**

**Office européen des brevets**

(11) Veröffentlichungsnummer: **0 212 349**
A1

# (12) EUROPÄISCHE PATENTANMELDUNG

(21) Anmeldenummer: 86110349.7

(22) Anmeldetag: 26.07.86

(51) Int. Cl.⁴: **B 65 G 25/08**

(30) Priorität: 16.08.85 DE 3529362

(43) Veröffentlichungstag der Anmeldung: 04.03.87
Patentblatt 87/10

(84) Benannte Vertragsstaaten: AT BE CH DE FR GB IT LI LU NL SE

(71) Anmelder: KÖBO Kohler + Bovenkamp GmbH, Hatzfelder Strasse 167, D-5600 Wuppertal 2 (DE)

(72) Erfinder: Schemann, Rainer, Siegelberg 32, D-5600 Wuppertal 23 (DE)

(74) Vertreter: Rieder, Hans-Joachim, Dr., Corneliusstrasse 45 Postfach 11 04 51, D-5600 Wuppertal 11 (DE)

(54) Späneförderer.

(57) Die Erfindung betrifft einen Späneförderer mit sich in einer Förderrinne hin- und herbewegender, Förderglieder tragenden Schubstange (9), welche mittels einzelner, im Abstand zueinander angeordneter Nüsse (20) auf Stegen (13) längsverschieblich gelagert ist, und verbessert insbesondere die Führung dadurch, daß die Nuß (20) bewegbar ist.

1                                                0212349

Späneförderer

Die Erfindung betrifft einen Späneförderer mit sich in einer Förderrinne hin- und herbewegender, Förderglieder tragenden Schubstange, welche mittels einzelner, im Abstand zueinander angeordneter Nüsse auf Stegen längsverschieblich gelagert ist, wobei jede Nuß einen unterseitigen Schlitz besitzt, mit dem sie reiterförmig auf dem Steg angeordnet und von einem Querstift getragen ist, welcher, ein Loch des Steges durchsetzend, in Löcher der einander gegenüberliegenden, zwischen sich den Schlitz belassenden Wandabschnitte der Nuß reicht.

Eine derartige Ausgestaltung ist aus dem DE-GM 8 401 514 bekannt. Erfahrungsgemäß nutzen sich die den Steg überragenden Stirnabschnitte der Nusse schneller ab als der Mittelabschnitt, was die Standzeit solcher Nüsse verkürzt.

Dem Gegenstand der Erfindung liegt die Aufgabe zugrunde, einen gattungsgemäßen Späneförderer in gebrauchsvorteilhafter, einfacher Weise so auszugestalten, daß durch günstige Figuration der Nüsse die Standzeit der Nüsse erhöht ist.

Gelöst wird diese Aufgabe dadurch, daß der Schlitzboden sattelförmig gestaltet ist und die Oberkante des Steges über die Länge der Nuß entsprechend sattelförmig verläuft.

Zufolge derartiger Ausgestaltung ist ein gattungsgemäßer Späneförderer von erhöhtem Gebrauchswert angegeben. Die Standzeit der Nüsse ist erheblich erhöht. Dort, wo erfahrungsgemäß der größte

18 801   Dr.R./P/G   16.07.1986

Verschleiß an der Nuß auftritt, nämlich an ihren Stirnenden, ist die Materialstärke am größten. Diese wesentliche Materialverdickung im Schleißbereich der Nuß erlaubt es, ein verschleißstärkeres Material wie z.B. Grauguß einzusetzen. Es wird dennoch eine wesentlich erhöhte Standzeit der Nuß gegenüber der bekannten Ausführung einer aus 6 mm gehärtetem Federstahl gefertigten Nuß erreicht bei gleichzeitiger positiver Nebenwirkung einer wesentlich erhöhten Standzeit der kostenintensiven Schubstange. Die entsprechende Gestaltung des Schlitzbodens und der Oberkante des Steges gestattet der Nuß dabei die erforderliche Beweglichkeit. Diese Sattelform läßt sich herstellungstechnisch einfach erzeugen, so daß der Vorteil einer verlängerten Standzeit nicht geschmälert wird.

Eine vorteilhafte Weiterbildung ist darin zu sehen, daß der Sattelverlauf bogenförmig gestaltet ist. Im Bereich des Sattelscheitels besitzt die Nuß die geringste Wandungsstärke. Ausgehend von diesem Sattelscheitel vergrößert sich die Dicke der Nuß im Bereich des Schlitzes zu den Stirnenden der Nuß hin.

Sodann erweist es sich als vorteilhaft, daß die Nuß in den Bereich einer randseitigen Aussparung der Oberkante des Steges ragt, deren Grundlinie entsprechend dem Sattelverlauf ausgerichtet ist. Es braucht also dann kein zusätzliches Material an den Steg angesetzt zu werden. Die Aussparung läßt sich durch randseitiges Ausklinken des Steges in einfacher Weise herstellen, wobei die Grundlinie gleichzeitig ihren Sattelverlauf erhält. Dieser kann, wie vorerwähnt wurde, bogenförmig gestaltet sein. Es ist jedoch auch ein dachförmiger Sattel denkbar, dem dann der Sattelverlauf des Schlitzes der Nuß anzupassen wäre.

Eine optimale Ausgestaltung wird durch einen Spalt zwischen sattelförmiger Kante des Steges und Schlitzboden erzielt. Auf die Nuß einwirkende Zwangskräfte während der Hin- und Herbewegung der Schubstange können nun die Nuß entsprechend verschwenken, so daß

18 801   Dr.R./P/G   16.07.1986

bestimmungsgemäß die Stirnenden der Nuß einem größeren Verschleiß ausgesetzt sind und dort das Abtragen erfolgt.

Ferner erweist es sich herstellungstechnisch als vorteilhaft, daß der Steg der Schenkel eines Winkelprofiles ist, dessen anderer Schenkel auf dem Förderrinnenboden aufliegt und von der unteren Längsflanke des Steges ein Boden-Schleißblech ausgeht. Vorzugsweise ist bei der Herstellung der die Aussparungen bildenden Ausklinkungen das Boden-Schleißblech noch nicht angesetzt. Dadurch ist das Winkelprofil einfacher zu hantieren. Ferner erweist sich diese Ausgestaltung als sehr gebrauchsstabil, da der Steg materialeinheitlich von dem einen auf dem Förderrinnenboden aufliegenden Schenkel ausgeht, welcher gleichzeitig auch als Schleißblech dient.

Schließlich besteht ein günstiges Merkmal noch darin, daß der Abstand zwischen der oberen Spurlinie der Nuß und der Steg-Oberkante größer ist als die Materialstärke der Nuß im Bereich des Sattelscheitels. Hierdurch wird die Schleißhöhe an den Stirnendbereichen der Nuß voll genutzt, bevor die obere Innenkante der Schubstange die Steg-Oberkante erreicht.

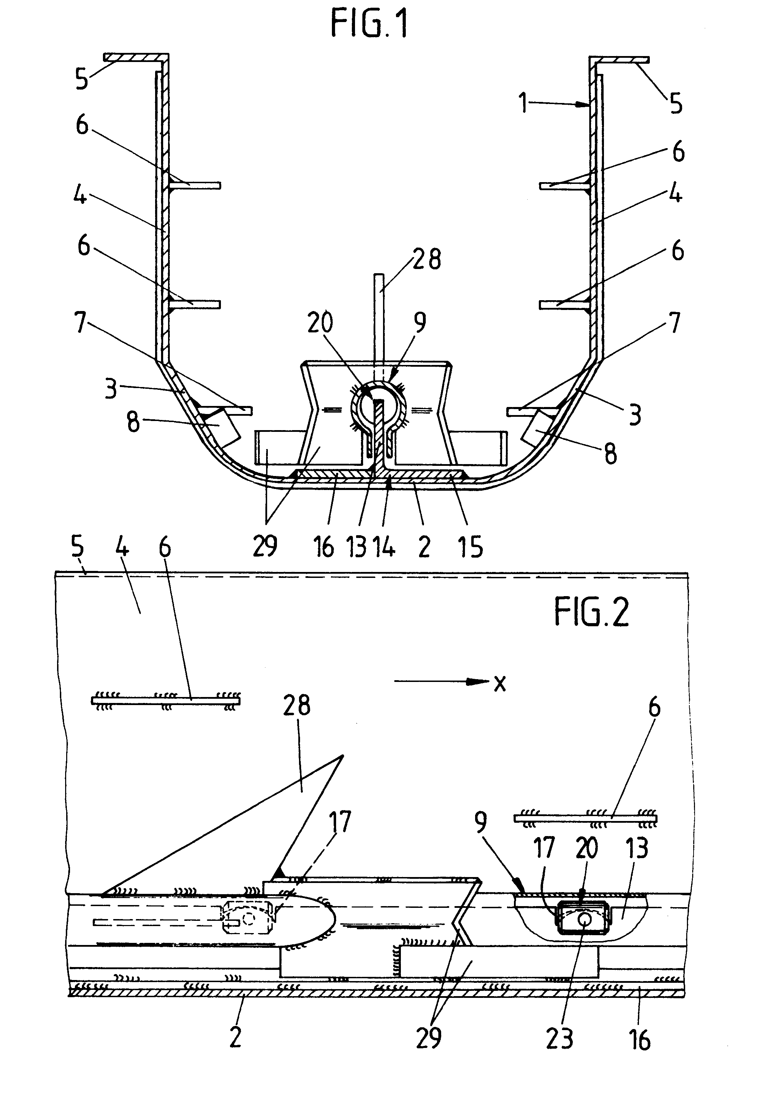

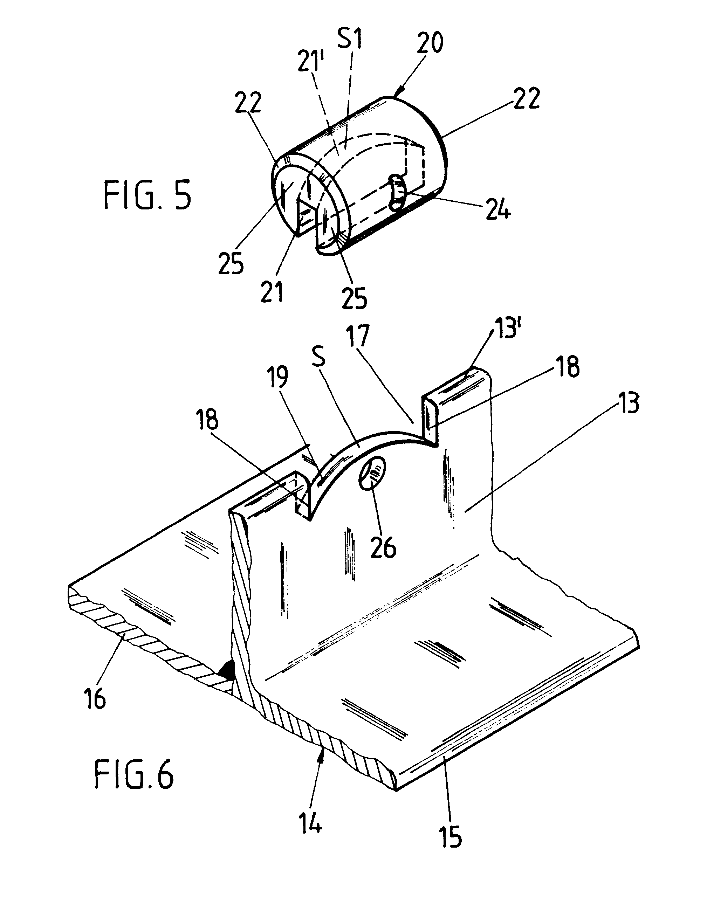

Nachstehend wird ein Ausführungsbeispiel der Erfindung anhand der Fig. 1-6 erläutert. Es zeigt

Fig. 1    einen Querschnitt durch eine eine Schubstange aufnehmende Förderrinne,

Fig. 2    einen Längsschnitt durch die Förderrinne,

Fig. 3    in etwa natürlicher Größe einen Längsschnitt durch die Schubstange und der sie tragenden Nuß,

Fig. 4    den Schnitt nach der Linie IV-IV in Fig. 3,

18 801   Dr.R./P/G   16.07.1986

Fig. 5    in perspektivischer Darstellung die Nuß und

Fig. 6    in perspektivischer Darstellung einen Ausschnitt des Steges
im Bereich der Aussparung zur Aufnahme der Nuß.

Der Späneförderer besitzt eine im Querschnitt U-förmige Förderrinne 1. Deren in der Horizontalen liegender U-Steg bildet den Rinnenboden 2, der über schräg ansteigende Zwischenabschnitte 3 in die Rinnenseitenwände 4 übergeht. Am oberen Ende sind diese mit nach außen gerichteten, in der Horizontalen liegenden Abwinklungen 5 versehen. Die so ausgestaltete Förderrinne kann als Ganzes versenkt in einen Kanal eingelassen werden, wobei die Abwinklungen 5 mit der Oberkante desselben abschließen können.

Auf der Innenwand der Rinnenseitenwände 4 sind auf unterschiedlichen Höhenlagen Widerhaken 6 angebracht. Weiterhin befinden sich an den Innenseiten der Zwischenabschnitte 3 Widerhaken 7, 8. Sämtliche Widerhaken 6 bis 8 dienen dazu, daß bei der Rückbewegung einer Schubstange 9 die in der Förderrinne 1 befindlichen Späne zurückgehalten werden.

Im einzelnen besteht die Schubstange 9 aus einem zylindrischen Abschnitt 10, von welchem über gerundete Biegezonen 11 seitliche, parallel zueinander liegende und in der Vertikalen befindliche Gleitleisten 12 ausgehen. In den Innenraum der Schubstange 9 greift ein Steg 13 ein. Dessen Dicke ist geringer als der Innenabstand zwischen den beiden Gleitleisten 12 der Schubstange.

Der in der Vertikalen liegende Steg 13 ist der Schenkel eines Winkelprofiles 14, dessen anderer, demgemäß horizontal ausgerichteter Schenkel 15 auf dem Förderrinnenboden 2 aufliegt und dort angeschweißt ist. Von der unteren Längsflanke des Steges 13 geht sodann, dem Schenkel 15 gegenüberliegend, ein Boden-Schleißblech 16 aus. Dieses ist mit dem Winkelprofil 14 verschweißt und seinerseits auch durch

18 801    Dr.R./P/G    16.07.1986

Schweißung an dem Förderrinnenboden 2 festgelegt. Der Schenkel 15 dieses Winkelprofils 14 stellt ebenfalls ein bodenseitiges Schleißblech dar.

Der Steg 13 besitzt an seiner Oberkante 13' im Abstand hintereinander liegende Aussparungen 17. Jede Aussparung 17 weist zwei vertikal stehende Randflanken 18 auf. Das untere Ende der Randflanken 18 wird verbunden durch eine konvexe Grundlinie 19, deren Scheitel S unterhalb der Oberkante 13' des Steges 13 verläuft.

Die Aussparungen 17 dienen zur Aufnahme von Nüssen 20, welche das Auflager für die Schubstange 9 darstellen. Der Außendurchmesser der Nuß 20 ist kleiner als der Innendurchmesser des zylindrischen Abschnitts 10 der Schubstange 9. Demzufolge sitzt die Schubstange 9, die Nuß 20 umgreifend, mit seitlichem Spiel auf dem Steg 13. Jede Nuß 20 ist mit einem unterseitigen Schlitz 21 versehen, dessen Weite der Dicke des Steges 13 entspricht. Der Schlitzboden 21 ist sattelförmig gestaltet derart, daß ein bogenförmiger Sattelverlauf vorliegt. Im Bereich des Sattelscheitels S 1 besitzt die Nuß die geringste Wandstärke. Dieser Sattelverlauf ist dem Verlauf der Grundlinie 19 der Aussparung 17 angepaßt. Auf diese Weise wird erreicht, daß die Stirnendbereiche 22 der Nuß gegenüber dem Bereich des Sattelscheitels S1 etwa die doppelte Wandstärke besitzen.

Zur Halterung jeder zylindrischen, aus Kunststoff oder Metall geformten Nuß dient ein Querstift 23, der sowohl zueinander fluchtende Löcher 24 der seitlich des Schlitzes 21 befindlichen Wandabschnitte 25 als auch ein Loch 26 des Steges 23 durchsetzt, welches Loch sich unterhalb des Scheitels S der Grundlinie 19 der Aussparung 17 erstreckt. Die Löcher 24 in der Nuß 20 sind nach unten versetzt exzentrisch in der Nuß 20 angeordnet. Die Stirnflächen 23' des Querstiftes 23 sind ballig geformt. Der Querstift 23 ist im Gleitsitz in die Löcher 24, 26 eingesteckt. Da das Bewegungsspiel der Schubstange 9 auf den Nüssen 20 geringer ist als die Materialstärke der Wandabschnitte 25, kann der Querstift 23 trotz seiner Verschieblichkeit nicht aus seiner die Nuß sichernden Lage gelangen.

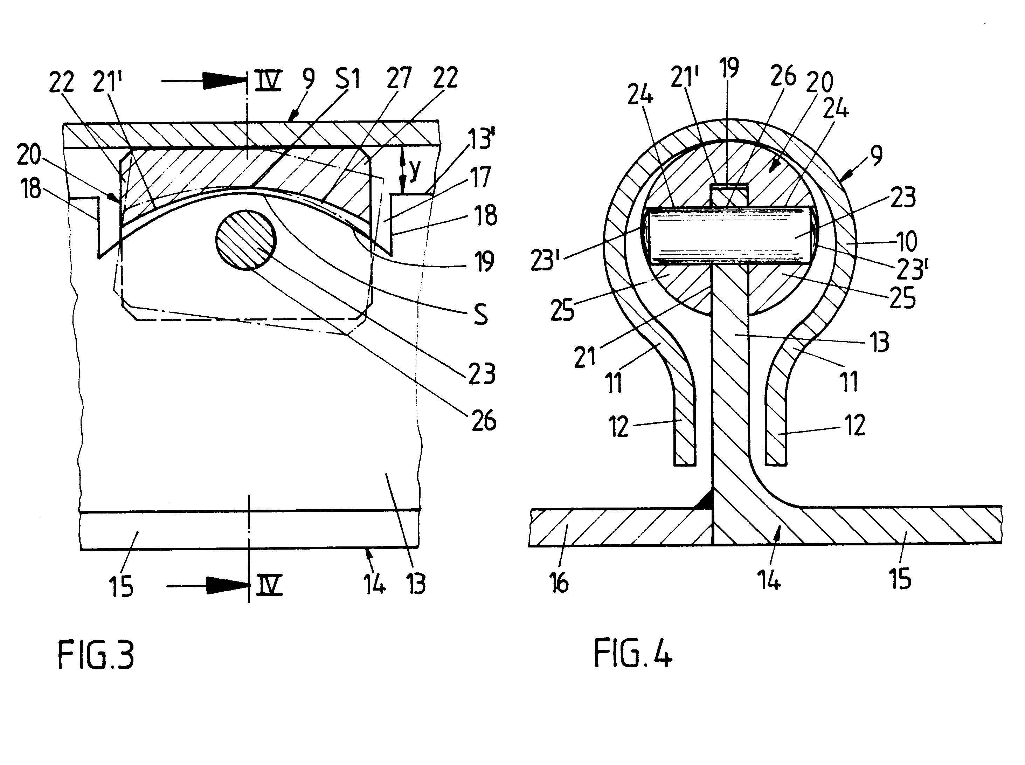

Aus Fig. 3 ist insbesondere ersichtlich, daß nach dem Anbringen der Nuß 20 ein Spalt 27 zwischen der sattelförmigen Kante (Grundlinie 19) und Schlitzboden 21 vorhanden ist. Im Bereich der Scheitel S, S 1 ist das Maß des Spaltes geringer als zu den Randkanten hin. Auf diese Weise ist ein bewußtes Bewegungsspiel für die Nuß 20 gegeben, wozu auch die Randflanken 18 mit Abstand vor den Stirnenden der Nuß liegen. im übrigen besteht ein solcher Abstand y zwischen oberer Spurlinie der Nuß 20 und Steg-Oberkante 13', welcher größer ist als die Wandstärke der Nuß im Bereich des Sattelscheitels S1. Beträgt z.B. die Wandstärke 8-9 mm, so so empfiehlt sich ein Abstand von 12-14 mm bei den üblichen Abmessungen.

In bekannter Weise ist die Schubstange 9 mit aufwärts gerichteten Spornen 28 ausgestattet. Ferner sind seitliche Sporne 29 vorgesehen. Diese Sporne 28, 29 dienen dazu, die in die Förderrinne 1 fallenden Späne bei der Förderbewegung in Pfeilrichtung x mitzunehmen. Nach Beendigung des Förderhubes fährt die Schubstange 9 um das entsprechende Maß zurück, um dann bei der erneuten Förderbewegung wieder Späne mitzuschleppen. Bei dieser Förderbewegung tritt insbesondere an den Stirnenden der Nüsse ein verstärkter Verschleiß auf. Es kann dann z. B. der in Fig. 3 strichpunktiert dargestellte Fall der Nuß eintreten, wobei veranschaulicht ist, daß ein Abtrag an den Stirnendbereichen 22 der Nuß 20 stattgefunden hat. Die Standzeit der Nuß ist jedoch erheblich erhöht, da der entsprechende Stirnendbereich 22 dort die größte Materialstärke in der Schlitzebene besitzt. Die Querschnitte von Stange und/oder Nuß können auch anders als rund, also z. B. auch hochkant stehende Eckprofile (Kasten oder Winkel) sein.

Alle in der Beschreibung erwähnten und in der Zeichnung dargestellten neuen Merkmale sind erfindungswesentlich, auch soweit sie in den Ansprüchen nicht ausdrücklich beansprucht sind.

18 801   Dr.R./P/G   16.07.1986

Patentansprüche

1. Späneförderer mit sich in einer Förderrinne hin- und herbewegender, Förderglieder tragenden Schubstange, welche mittels einzelner, im Abstand zueinander angeordneter Nüsse auf Stegen längsverschieblich gelagert ist, wobei jede Nuß einen unterseitigen Schlitz besitzt, mit dem sie reiterförmig auf dem Steg angeordnet und von einem Querstift getragen ist, welcher, ein Loch des Steges durchsetzend, in Löcher der einander gegenüberliegenden, zwischen sich den Schlitz belassenden Wandabschnitte der Nuß reicht, dadurch gekennzeichnet, daß der Schlitzboden (21') sattelförmig gestaltet ist und die Oberkante des Steges (13) über die Länge der Nuß (20) entsprechend sattelförmig verläuft.

2. Späneförderer nach Anspruch 1, dadurch gekennzeichnet, daß der Sattelverlauf bogenförmig gestaltet ist.

3. Späneförderer nach einem oder mehreren der vorhergehenden Ansprüche, dadurch gekennzeichnet, daß die Nuß (20) in den Bereich einer randseitigen Aussparung (17) der Oberkante (13') des Steges (13) ragt, deren Grundlinie (19) entsprechend dem Sattelverlauf ausgerichtet ist.

4. Späneförderer nach einem oder mehreren der vorhergehenden Ansprüche, gekennzeichnet durch einen Spalt (27) zwischen sattelförmiger Kante (Grundlinie 19) des Steges (13) und Schlitzboden (21').

5. Späneförderer nach einem oder mehreren der vorhergehenden Ansprüche, dadurch gekennzeichnet, daß der Steg (13) der Schenkel eines Winkelprofiles (14) ist, dessen anderer Schenkel (15) auf dem Förderrinnenboden (2) aufliegt und von der unteren Längsflanke des Steges (13) ein Boden-Schleißblech (16) ausgeht.

18 801   Dr.R./P/G   16.07.1986

6. Späneförderer nach einem oder mehreren der vorhergehenden Ansprüche, dadurch gekennzeichnet, daß der Abstand (y) zwischen der oberen Spurlinie der Nuß (20) und der Steg-Oberkante (13') größer ist als die Materialstärke der Nuß (20) im Bereich des Sattelscheitels (S1).

18 801   Dr.R./P/G   16.07.1986

FIG.1

FIG.2

FIG.4

FIG.3

FIG. 5

FIG.6